# EUROPEAN PATENT APPLICATION

(11) **EP 4 604 266 A1**
(43) Date of publication of application: **20.08.2025**
(21) Application number: 22962468.9
(22) Date of filing: 21.10.2022
(51) Int. Cl.: H01M 10/613, H01M 50/30, H01M 10/6567

(54) **HEAT EXCHANGE ASSEMBLY, BATTERY MODULE, BATTERY AND ELECTRICAL DEVICE**

(71) Applicant: Contemporary Amperex Technology (Hong Kong) Limited, Hong Kong (HK)
(72) Inventor: ZHANG, Chenchen, Ningde, Fujian 352100 (CN); WANG, Pu, Ningde, Fujian 352100 (CN); FENG, Jingjie, Ningde, Fujian 352100 (CN); LI, Xing, Ningde, Fujian 352100 (CN); LI, Zhenhua, Ningde, Fujian 352100 (CN); TANG, Yu, Ningde, Fujian 352100 (CN); XU, Chenyi, Ningde, Fujian 352100 (CN)
(74) Representative: Ziebig Hengelhaupt Intellectual Property Attorneys Patentanwaltskanzlei PartGmbB
(86) International application number: PCT/CN2022/126785
(87) International publication number: WO 2024/082285

(57) **Abstract**

A heat exchanging assembly (100), a battery module (300), a battery (400), and an electrical device (500) are provided. The heat exchanging assembly (100) includes a heat exchanging plate (10). The heat exchanging plate (10) has a heat exchanging flow channel (11). The heat exchanging plate (10) has a discharge structure (12). The discharge structure (12) is configured to correspond to a pressure relief mechanism (201) of a battery cell (200). The heat exchanging flow channel (11) is arranged on at least one side of the discharge structure (12) in a width direction of the heat exchanging plate (10). The heat exchanging flow channel (11) is configured to exchange heat with the battery cell (200).

## Description

### FIELD

The present application relates to the field of batteries, and more particularly, to a heat exchanging assembly, a battery module, a battery, an electrical device.

### BACKGROUND

In the related technologies, a box of a battery is provided with a structural beam. The structural beam is integrated with a heat exchanging plate configured to exchange heat with a battery cell in the box. Since an explosion-proof valve of the battery cell is arranged corresponding to the heat exchanging plate, when the battery cell experiences thermal runaway, high-temperature and high-pressure substances sprayed from the explosion-proof valve are prone to damage the heat exchanging plate, leading to damage to a heat exchanging flow channel in the heat exchanging plate, causing leakage of the heat exchanging flow channel. Furthermore, due to a large structural size of the explosion-proof valve in a thickness direction of the battery cell, a heat dissipation area between the battery cell and the heat exchanging plate is small, which affects heat dissipation efficiency of the heat exchanging plate and affects heat exchanging efficiency between the battery cell and the heat exchanging plate. Meanwhile, the heat exchanging plate in the related technologies has a complex structure, which is not easy to be manufactured.

### SUMMARY

The present application aims to solve at least one of the technical problems in the related technologies. To this end, an object of the present application is to provide a heat exchanging assembly, to effectively prevents leakage of a heat exchanging flow channel and is provided with a heat exchanging plate having a simple structure to be easily manufactured, thereby improving heat exchanging efficiency between the battery cell and the heat exchanging plate.

A battery module is further provided according to the present application.

A battery is further provided according to the present application.

An electrical device is further provided according to the present application.

In a first aspect, a heat exchanging assembly is provided according to embodiments of the present application. The heat exchanging assembly includes a heat exchanging plate. The heat exchanging plate has a heat exchanging flow channel. The heat exchanging plate has a discharge structure. The discharge structure is configured to correspond to a pressure relief mechanism of a battery cell. The heat exchanging flow channel is arranged on at least one side of the discharge structure in a width direction of the heat exchanging plate. The heat exchanging flow channel is configured to exchange heat with the battery cell.

In the technical solution described above, by arranging the discharge structure, when the battery cell experiences thermal runaway, high-temperature and high-pressure substances sprayed from the battery cell are sprayed through the heat exchanging plate from the discharge structure, avoiding damage to the heat exchanging flow channel in the heat exchanging plate, thereby effectively prevent the leakage of the heat exchanging flow channel. Furthermore, the heat exchanging plate according to the present application has the simple structure to be easily manufactured. Meanwhile, since the heat exchanging flow channel is arranged on the at least one side of the discharge structure, it can be ensured that there is a sufficient heat dissipation area between the battery cell and the heat exchanging plate to improve the heat exchanging efficiency between the battery cell and the heat exchanging plate.

In some embodiments, the heat exchanging flow channel is arranged on two sides of the discharge structure.

In the technical solution described above, by arranging the heat exchange flow channel configured to exchange heat with the battery cell on the two sides of the discharge structure, a heat exchanging area between the battery cell and the heat exchanging plate can be further increased to improve the heat exchanging efficiency of the heat exchanging plate, and further to improve the heat exchanging efficiency between the battery cell and the heat exchanging plate.

In some embodiments, the heat exchanging flow channel extends in a length direction of the heat exchanging plate.

In the technical solution described above, by extending the heat exchanging flow channel in the length direction of the heat exchanging plate, an arrangement area of the heat exchanging flow channel can be increased, and each heat exchanging flow channel can exchange heat with a plurality of battery cells, which further improves the heat exchanging efficiency of the heat exchanging plate.

In some embodiments, the heat exchanging flow channel has a maximum width of D1; and the pressure relief mechanism of the battery cell has a maximum width of D2, by a relation expression satisfying 0.05D1≤D2≤D1.

In the technical solution described above, by satisfying 0.05D1≤D2≤D1, a flow speed of the heat exchanging medium in the heat exchanging flow channel can be maintained, and the heat exchanging flow channel can be easily processed on the heat exchanging plate. In this way, the heat exchanging area between the battery cell and the heat exchanging plate can also be ensured.

In some embodiments, a plurality of heat exchanging flow channels is sequentially arranged in the width direction of the heat exchanging plate, and the discharge structure is arranged between at least two adjacent heat exchanging flow channels of the plurality of heat exchanging flow channels.

In the technical solution described above, by arranging the at least one discharge structure between the two adjacent heat exchanging flow channels, the two adjacent heat exchanging flow channels can exchange heat with a same battery cell simultaneously, which can improve the heat exchanging efficiency between the battery cell and the heat exchanging plate, and thus can rapidly heat up or cool down the battery cell.

In some embodiments, a plurality of discharge structures is sequentially arranged in a length direction of the heat exchanging plate and located between the at least two adjacent heat exchanging flow channels of the plurality of heat exchanging flow channels.

In the technical solution described above, with there being the plurality of discharge structures sequentially arranged in the length direction of the heat exchanging plate between the two adjacent heat exchanging flow channels, and by configuring each discharge structure correspond to a pressure relief mechanism of at least one battery cell, the two adjacent heat exchanging flow channels can exchange heat with the plurality of battery cells simultaneously, which can further improve the heat exchanging efficiency of the heat exchanging plate.

In some embodiments, any two adjacent discharge structures of the plurality of discharge structures are spaced equidistantly from each other in the length direction of the heat exchanging plate.

In the technical solution described above, by spacing any two adjacent discharge structures equidistantly from each other, consistency of an overall structure of the heat exchanging plate can be improved, which facilitates the manufacturing of the heat exchanging plate to improve production efficiency of the heat exchanging plate.

In some embodiments, the plurality of heat exchanging flow channels includes a first end heat exchanging flow channel, a second end heat exchanging flow channel, and a middle heat exchanging flow channel. The middle heat exchanging flow channel is located between the first end heat exchanging flow channel and the second end heat exchanging flow channel. Each of the first end heat exchanging flow channel and the second end heat exchanging flow channel has a width smaller than a total width of the middle heat exchanging flow channel.

In the technical solution described above, since a same middle heat exchanging flow channel can exchange heat with two adjacent layers of battery cells, with the width of each of the first end heat exchanging flow channel and the second end heat exchanging flow channel being smaller than the total width of the middle heat exchanging flow channel, a sufficient heat exchanging area between the middle heat exchanging flow channel and each battery cell can be ensured, which can ensure the heat exchanging efficiency between the battery cell and the heat exchanging plate.

In some embodiments, a plurality of middle heat exchanging flow channels is provided.

In the technical solution described above, the heat exchanging plate can exchange heat with more battery cells simultaneously by arranging the plurality of middle heat exchanging flow channels, which can further improve the heat exchanging efficiency of the heat exchanging plate.

In some embodiments, the heat exchanging flow channels have a wave shape.

In the technical solution described above, the arrangement area of the heat exchanging flow channel can be increased by the wave-shaped heat exchanging flow channels, which can increase the heat exchanging area between the heat exchanging flow channel and the battery cell.

In some embodiments, one of the two adjacent heat exchanging flow channels includes a first arc-shaped segment and the other one of the two adjacent heat exchanging flow channels includes a second arc-shaped segment. The first arc-shaped segment and the second arc-shaped segment are arranged opposite to each other in the width direction of the heat exchanging plate. The first arc-shaped segment and the second arc-shaped segment are constructed to be curved in a direction facing away from each other. At least one discharge structure is located between the first arc-shaped segment and the second arc-shaped segment.

In the technical solution described above, the arrangement area of the heat exchanging flow channel can be further increased by locating the at least one discharge structure between the first arc-shaped segment and the second arc-shaped segment, which can further increase the heat exchanging area between the heat exchanging flow channel and the battery cell, and thus further improves the heat exchanging efficiency of the heat exchanging plate.

In some embodiments, the plurality of heat exchanging flow channels is in communication with each other.

In the technical solution described above, a heat exchanging medium in the heat exchanging flow channel can freely flow in the plurality of heat exchanging flow channels with the plurality of heat exchanging flow channels being in communication with each other, which can improve consistency of heat exchanging efficiency of different regions of the heat exchanging plate. Therefore, a temperature difference of the plurality of battery cells can be reduced.

In some embodiments, the heat exchanging plate has a connecting flow channel in communication with the plurality of the heat exchanging flow channels.

In the technical solution described above, an intercommunication effect of the plurality of the heat exchanging flow channels is achieved by arranging the connecting flow channel.

In some embodiments, the discharge structure is constructed in a strip shape, and the discharge structure extends in a length direction of the heat exchanging plate.

In the technical solution described above, by constructing the discharge structure into the strip shape, the discharge structure can be adapted to the pressure relief mechanism of the battery cell, and a width of the discharge structure can be reduced. In this way, an arrangement width of the heat exchanging flow channel can be increased. Therefore, the heat exchanging area between the heat exchanging flow channel and the battery cell can be increased, greatly improving the heat exchanging efficiency of the heat exchanging plate.

In some embodiments, the discharge structure is constructed as a discharge hole.

In the technical solution described above, by constructing the discharge structure as the discharge hole, when the battery cell experiences the thermal runaway, it can be ensured that the high-temperature and high-pressure substances sprayed from the battery cell are sprayed through the heat exchanging plate from the discharge hole, and it can also reduce a production difficulty of the heat exchanging plate, improve the production efficiency of the heat exchanging plate, and lower production cost of the heat exchanging plate.

In some embodiments, the discharge structure is constructed as a weak portion. The weak portion is separated from the heat exchanging plate when the weak portion is subjected to a pressure reaching a predetermined value and/or a temperature of the weak portion reaches a predetermined temperature.

In the technical solution described above, by constructing the discharge structure as the weak portion, when the battery cell experiences the thermal runaway, it can be ensure that the high-temperature and high-pressure substances sprayed from the battery cell are sprayed through the heat exchanging plate from the weak portion, avoiding explosion of the battery cell.

In some embodiments, the heat exchanging plate has an indentation to form the weak portion on the heat exchanging plate.

In the technical solution described above, an effect of forming the weak portion on the heat exchanging plate can be realized by providing the indentation on the heat exchanging plate.

In some embodiments, the heat exchanging plate has a medium inlet and a medium outlet. The heat exchanging flow channel is in communication with the medium inlet and the medium outlet.

In the technical solution described above, with the heat exchanging flow channel being in communication with the medium inlet and the medium outlet, an effect in which the heat exchanging medium flows in and out of the heat exchanging flow channel can be achieved, which can ensure the heat exchanging efficiency of the heat exchanging plate.

In some embodiments, in a thickness direction of the heat exchanging plate, the heat exchanging flow channel protrudes from one side surface of the heat exchanging plate, and another side surface of the heat exchanging plate is constructed as a plane.

In the technical solution described above, by constructing the other side surface of the heat exchanging plate as the plane, the heat exchanging plate is in face-to-face contact with the battery cell when the other side surface of heat exchanging plate is in contact with the battery cell, which can increase a contact area between the heat exchanging plate and the battery cell. In this way, the heat exchanging efficiency between the heat exchanging plate and the battery cell can be improved.

In some embodiments, in a thickness direction of the heat exchanging plate, the heat exchanging flow channel and the discharge structure protrude from a same side surface of the heat exchanging plate.

In the technical solution described above, by protruding the heat exchanging flow channel and the discharge structure from the same side surface of the heat exchanging plate, when the discharge structure is aligned with the pressure relief mechanism of the battery cell, it can be ensured that the heat exchanging flow channel is in contact with the battery cell for heat exchanging.

In some embodiments, the heat exchanging assembly further includes a main member. The heat exchanging plate is attached to at least one side of the main member.

In the technical solution described above, by attaching the heat exchanging plate to the at least one side of the main member, the heat exchanging plate can be integrated into the main member such that the main member has heat exchanging performance.

In some embodiments, the main member has a groove in which at least part of the heat exchanging plate is accommodated.

In the technical solution described above, the heat exchanging plate can be fixed to the main member by accommodating the at least part of the heat exchanging plate in the groove.

In some embodiments, a side surface of the heat exchanging plate where the heat exchanging flow channel protrudes from faces toward the groove.

In the technical solution described above, by providing that the side surface of the heat exchanging plate where the heat exchanging flow channel protrudes from faces the groove, the other side surface of the heat exchanging plate which is constructed as the plane can be in contact with the battery cell for the heat exchanging, which can ensure that the contact area between the battery cell and the heat exchanging plate is increased.

In a second aspect, a battery module is further provided according to embodiments of the present application. The battery module includes the heat exchanging assembly described above and the battery cell. The battery cell is arranged on at least one side of the heat exchanging plate. The discharge structure is configured to correspond to the pressure relief mechanism of the battery cell, and the heat exchanging flow channel is configured to correspond to the battery cell.

In some embodiments, the heat exchanging assembly is the heat exchanging assembly described above, and a side surface of the battery cell provided with the pressure relief mechanism is attached to a surface of the heat exchanging plate constructed as a plane.

In the technical solution described above, by attaching the side surface of the battery cell provided with the pressure relief mechanism to the surface of the heat exchanging plate to be constructed as the plane, the battery cell is in face-to-face contact with the heat exchanging plate, which can increase the contact area between the heat exchanging plate and the battery cell. In this way, the heat exchanging efficiency between the heat exchanging plate and the battery cell can be improved.

In some embodiments, the pressure relief mechanism is constructed as a strip-shaped structure extending in a length direction of the heat exchanging plate.

In the technical solution described above, by constructing the pressure relief mechanism as the strip-shaped structure, a width of the pressure relief mechanism can be reduced, and the heat exchanging area between the battery cell and the heat exchanging plate can thus be increased. Therefore, the heat exchanging efficiency of the heat exchanging plate can be improved.

In some embodiments, the battery cell includes a plurality of strip-shaped pressure relief mechanisms extending in the length direction of the heat exchanging plate and arranged at a same end surface of the battery cell.

In the technical solution described above, by arranging the plurality of strip-shaped pressure relief mechanisms, when the battery cell experiences the thermal runaway, it cannot affect spraying of the high-temperature and high-pressure substances from the battery cell for pressure relief. In this way, the explosion of the battery cell can be effectively avoided.

In a third aspect, a battery is further provided according to embodiments of the present application. The battery includes the battery module described above.

In a fourth aspect, an electrical device is further provided according to embodiments of the present application. The electrical device includes the battery described above. The battery is configured to provide electrical energy.

Additional aspects and advantages of the embodiments of present application will be provided at least in part in the following description or will become apparent in part from the following description, or can be learned from the practice of the embodiments of the present application.

### BRIEF DESCRIPTION OF THE DRAWINGS

FIG. 1 is a schematic structural view of a vehicle according to some embodiments of the present application.
FIG. 2 is an exploded view of a battery according to some embodiments of the present application.
FIG. 3 is a schematic assembly diagram of a battery cell and a heat exchanging assembly according to some embodiments of the present application.
FIG. 4 is a schematic diagram in which a layer of battery cell is arranged on two sides of a heat exchanging assembly according to some embodiments of the present application.
FIG. 5 is a side view in which two heat exchanging flow channels are arranged on a heat exchanging assembly according to some embodiments of the present application.
FIG. 6 is a schematic diagram in which two layers of battery cells are arranged on each of two sides of a heat exchanging assembly according to some embodiments of the present application.
FIG. 7 is a side view in which three heat exchanging flow channels are arranged on a heat exchanging assembly according to some embodiments of the present application.
FIG. 8 is a schematic diagram in which three layers of battery cells are arranged on each of two sides of a heat exchanging assembly according to some embodiments of the present application.
FIG. 9 is a side view in which four heat exchanging flow channels are arranged on a heat exchanging assembly according to some embodiments of the present application.
FIG. 10 is a schematic diagram of a battery cell according to some embodiments of the present application.

### DETAILED DESCRIPTION

In order to make objects, technical solutions, and advantages of the present application more apparent, technical solutions according to embodiments of the present application will be described clearly and completely below with reference to the accompanying drawings of the embodiments of the present application. Obviously, the embodiments described below are only a part of the embodiments of the present application, rather than all embodiments of the present application. On a basis of the embodiments of the present application, all other embodiments obtained by those skilled in the art without creative labor shall fall within the protection scope of the present application.

Unless otherwise defined, all technical and scientific terms used herein have the same meaning as commonly understood by those skilled in the art of the present application. Terms in the specification of the present application herein are only used for the purpose of describing specific embodiments, and are not intended to limit the present application. In addition, the terms "including" and "having" and any variants thereof as used in the description of the embodiments of the present application, the appended claims, and the above accompanying drawings are intended to cover non-exclusive inclusions. Terms "first", "second", etc. in the embodiments of the present application, the appended claims, and the above accompanying drawings are not intended for the description of a specific order or a priority relationship, but rather distinguish different objects.

Reference herein to "an embodiment" means that a particular feature, structure or characteristic described in combination with the embodiment can be included in at least one embodiment of the present application. The appearance of this phrase in various places in the specification are not necessarily all referring to the same embodiment, nor is it an independent or alternative embodiment that is mutually exclusive of other embodiments.

In the present application, unless specified or limited otherwise, the terms "mounted," "connected," "coupled" and "fixed" are understood broadly, such as fixed, detachable mountings, connections and couplings or integrated, and also can be direct and via media indirect mountings, connections, and couplings, and further can be inner mountings, connections and couplings of two components, which can be understood by those skilled in the art according to the detail embodiment of the present application.

In the present application, terms "and/or" describes an association relationship between correlated objects, including three relationships. For example, "A and/or B" can mean A only, B only, or both A and B. In addition, the symbol "/" in the present application generally indicates an "or" relationship between the correlated objects preceding and succeeding the symbol.

In the embodiments of the present application, the same reference numerals represent the same components, and detailed descriptions of the same components in different embodiments are omitted for the sake of simplicity. It should be understood that a thickness, a length, a width, and other dimensions of various components in the embodiments of the present application, as well as an overall thickness, length, width, and other dimensions of an integrated device illustrated in the drawings, are only exemplary illustrations and should not constitute any limitation to the present application.

In the present application, "plurality of" means two or more (including two).

In the present application, a battery cell 200 includes a lithium-ion secondary battery 400, a lithium-ion primary battery 400, a lithium sulfur battery 400, a sodium lithium-ion battery 400, a sodium ion battery 400 or a magnesium ion battery 400, etc., which are not limited in the embodiments of the present application. The battery cell 200 may be in a shape of a cylinder, a flat body, a cuboid, or other shapes, which are not limited in the embodiments of the present application. The battery cell 200 is generally divided into three types based on a packaging method: a cylinder-shaped battery cell 200, a square-shaped battery cell 200, and a soft-pack battery cell 200, which are not limited in the embodiments of the present application.

The battery 400 mentioned in the embodiments of the present application refers to a single physical module including one or more battery cells 200 to provide a higher voltage and capacity. For example, the battery 400 mentioned in the present application may include a battery module 300 or a battery 400 pack. The battery 400 generally includes a box for packaging one or more battery cells 200 or a plurality of battery modules 300. The box can prevent liquid or other foreign matters from affecting charging or discharging of the battery cell 200.

The battery cell 200 may include a housing, an electrode assembly, and an electrolyte. The housing is configured to accommodate the electrode assembly, and the electrolyte. The electrode assembly consists of a positive electrode plate, a negative electrode plate, and a separator. Operation of the electrode assembly primarily relies on a movement of metallic ions between the positive and negative electrode plates. The positive electrode plate includes a positive electrode current collector and a positive electrode active material layer. The positive electrode active material layer is coated at a surface of the positive electrode current collector. A part of the positive electrode current collector that is not coated with the positive electrode active material layer protrudes from a part that has been coated with the positive electrode active material layer. The part that is not coated with the positive active material layer serves as a positive electrode tab. A lithium-ion battery 400 is taken as an example, a material of a positive electrode current collector may be aluminum, and a positive electrode active material may be lithium cobalt oxide, lithium iron phosphate, ternary lithium, lithium manganate, etc. A negative electrode plate includes a negative electrode current collector and a negative electrode active material layer. The negative electrode active material layer is coated at a surface of the negative electrode current collector. A part of the negative electrode current collector that is not coated with the negative electrode active material layer protrudes from a part that has been coated with the negative electrode active material layer. The part that is not coated with the negative electrode active material layer serves as a negative electrode tab. A material of the negative electrode current collector may be copper, and a negative electrode active material may be carbon, silicon, etc. To ensure no fusing during passing through a high current, a plurality of positive electrode tabs is provided and stacked together, and a plurality of negative electrode tabs is provided and stacked together.

A material of the separator may be polypropylene (PP), polyethylene (PE), etc. In addition, the electrode assembly may have a winding structure or a laminated structure, and the embodiments of the present application are not limited thereto.

A box of the existing battery is provided with a structural beam. The structural beam is integrated into a heat exchanging plate configured to exchange heat with a battery cell in the box. Because an explosion-proof valve of the battery cell is configured to correspond to the heat exchanging plate, when the battery cell experiences thermal runaway, high-temperature and high-pressure substances sprayed from the explosion-proof valve are prone to damage the heat exchanging plate, leading to damage to a heat exchanging flow channel in the heat exchanging plate, causing leakage of the heat exchanging flow channel. Furthermore, due to large structural size of the explosion-proof valve in a thickness direction of the battery cell, a heat dissipation area between the battery cell and the heat exchanging plate is small, which affects heat dissipation efficiency of the heat exchanging plate and affects heat exchanging efficiency between the battery cell and the heat exchanging plate. Meanwhile, the existing heat exchanging plate has a complex structure, which is not easy to manufacture.

The battery 400 disclosed in the embodiments of the present application may, but is not limited to, be used in an electrical device 500 such as a vehicle, a ship, or an aircraft. A battery 400 thermal management system, the battery 400, etc., disclosed in the present application may be used to form a power supply system for this electrical apparatus, which help to enhance the scope of application of the battery 400 thermal management system and reduces a fitting difficulty of the battery 400 thermal management system.

A battery cell 400 according to the embodiments of the present application can be used in an electrical device 500 that uses the battery 400 as a power supply. The electric al device 500 can be, but are not limited to, a mobile phone, a tablet, a laptop, an electric toy, an electric tool, an electric bicycle, an electric motorcycle, an electric car, a ship, a spacecraft, etc. The electric toy can include a fixed or mobile electric toy, such as a game console, an electric car toy, an electric ship toy, an electric airplane toy, etc. The spacecraft can include an airplane, a rocket, a space shuttle, a spaceship, etc.

For convenience of explanation in the following embodiments, an electrical device 500 according to an embodiment of the present application is described using a vehicle as an example.

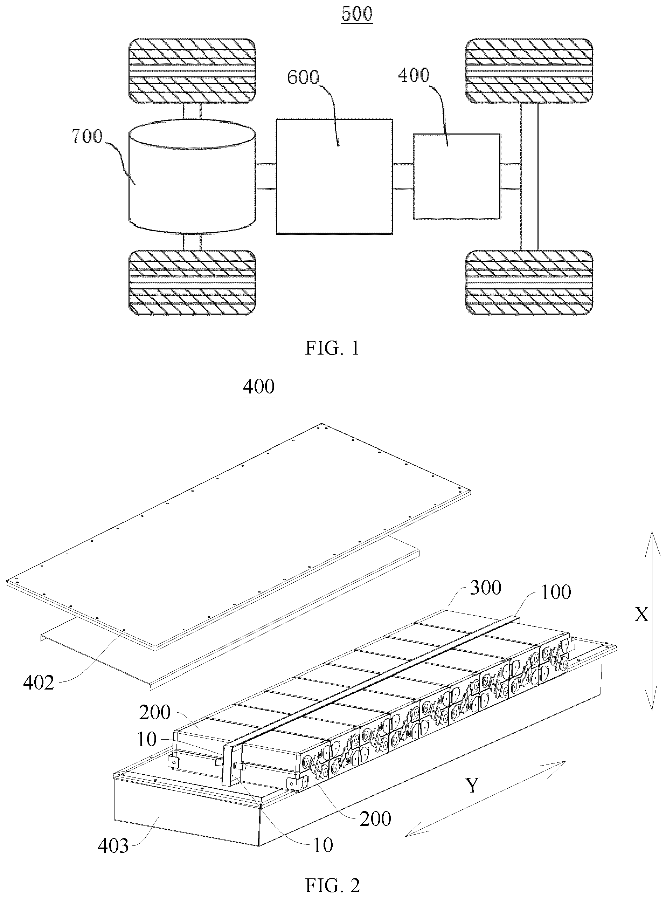

With reference to FIG. 1, FIG. 1 is a schematic structural view of a vehicle according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, etc. The vehicle 400 is provided with a battery 400 internally. The battery 400 may be disposed at a bottom, a head, or a tail of the vehicle. The battery 400 may be configured to supply power to the vehicle. For example, the battery 400 may serve as an operating power source for the vehicle. The vehicle may also include a controller 600 and a motor 700. The controller 600 is configured to control the battery 400 to supply power to the motor 700, for example, to meet operational power consumption requirements for starting, navigation, and driving of the vehicle.

In some embodiments of the present application, the battery 400 can not only serve as an operating power supply of the vehicle but also can serve as a drive power supply of the vehicle to replace or partially replace fuel or natural gas to provide driving power for the vehicle.

With reference to FIG. 2, FIG. 2 is a schematic view of an exploded structure of a battery 400 according to some embodiments of the present application. The battery 400 includes a box and a battery module 300 accommodated in the box. The battery module 300 includes a plurality of battery cell 200 and a heat exchanging assembly 100. The box is configured to provide an accommodation space for the battery cell 200 and the heat exchanging assembly 100. The box may have a variety of structures. In some embodiments, the box may include a first box body 402 and a second box body 403. The first box body 402 and the second box body 403 fit with each other. An accommodation space for accommodating the battery cell 200 is defined by the first box body 402 and the second box body 403 jointly. The second box body 403 may have a hollow structure with one end open, and the first box body 402 may be a platelike structure. The first box body 402 covers an open side of the second box body 403 to allow the first box body 402 and the second box body 403 to jointly define the accommodation space. Each of the first box body 402 and the second box body 403 may also be a hollow structure with one side open, and the open side of the first box body 402 covers the open side of the second box body 403. Of course, the box formed by the first box body 402 and the second box body 403 may be in various shapes, such as a cylinder, a cuboid, etc.

In the battery 400, a plurality of battery cells may be connected in series, in parallel, or in series and parallel. The expression "in series and parallel" means that the plurality of battery cells is connected both in series and in parallel. The plurality of battery cells may be directly connected in series, in parallel, or in series and parallel, and then a whole composed of the plurality of battery cells may be accommodated in the box. Of course, the battery 400 may also be in a form where the plurality of battery cells 200 is first connected in series or in parallel or in series and parallel to compose the battery module 300, the plurality of battery modules is then connected in series or in parallel or in series and parallel to form a whole, and the whole is accommodated in the box. The battery 400 may also include other structures. For example, the battery 400 may further include a current collecting component configured to implement an electrical connection between a plurality of battery cells 200.

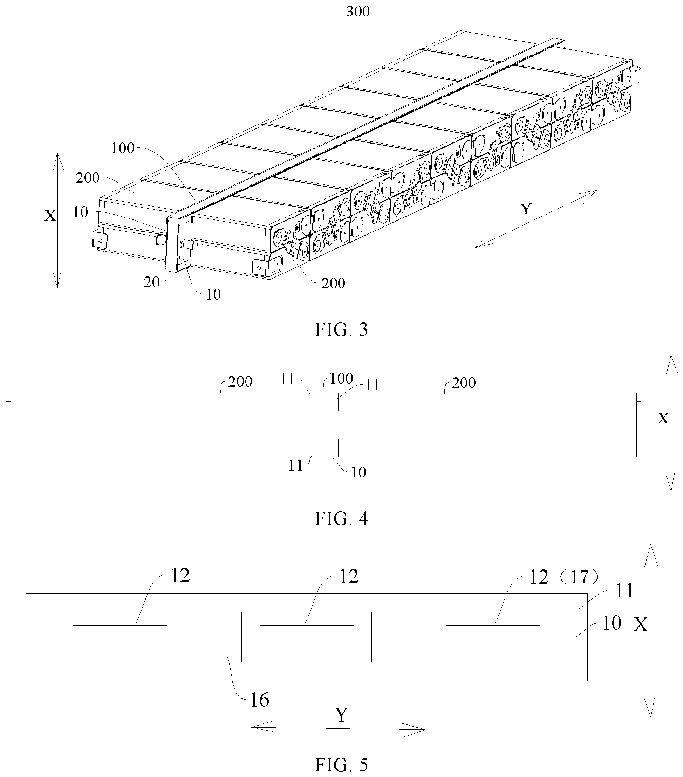

As illustrated in FIGS. 2 and 3, the battery 400 includes at least one layer of battery cells 200. For example, the battery 400 includes a plurality of layers of battery cells 200 arranged in a first direction, and the first direction refers to a direction X in FIG. 3. Each layer of battery cells 200 includes a plurality of battery cells 200 arranged in a second direction, and the second direction refers to a length direction of a heat exchanging plate 10, that is, the second direction refers to a direction Y in FIG. 3. The first direction and the second direction are a height direction and a length direction of the box respectively, and the first direction and the second direction are perpendicular to each other.

Each battery cell 200 may be a secondary battery 400 or a primary battery 400, or may also be a lithium sulfur battery 400, a sodium ion battery 400, or a magnesium ion battery 400, but is not limited thereto. The battery cell 200 may be in a shape of cylinder, flat body, cuboid, or other shapes. Illustratively, in FIG. 3, the battery cell 200 has a cylinder shape.

A heat exchanging assembly 100 according to an embodiment of the present application is described below with reference to FIGS. 2 to 10.

As illustrated in FIGS. 2 to 10, a heat exchanging assembly 100 according to an embodiment of the present application includes a heat exchanging plate 10 having a heat exchanging flow channel 11. The heat exchanging plate 10 has a discharge structure 12. The discharge structure 12 is configured to correspond to a pressure relief mechanism 201 of a battery cell 200. The pressure relief mechanism 201 of the battery cell 200 is an explosion-proof valve of the battery cell 200. The battery cell 200 is arranged on a side of the heat exchanging plate 10, and the pressure relief mechanism 201 of the battery cell 200 is configured to correspond to the discharge structure 12. The heat exchanging flow channel 11 is arranged on at least one side of the discharge structure 12 in a width direction of the heat exchanging plate 10, i.e., a direction X in FIG. 4. The heat exchanging flow channel 11 is configured to exchange heat with the battery cell 200. It should be noted that the heat exchanging flow channel 11 has a heat exchanging medium, and after the heat exchanging plate 10 is in contact with the battery cell 200, the heat exchanging flow channel 11 exchanges heat with the battery cell 200, achieving cooling and heating effects on the battery cell 200.

The heat exchanging assembly 100 serves as a structural beam in the box, and a discharge passage may be formed in the heat exchanging assembly 100. The battery cell 200 is in contact with the heat exchanging plate 10. The pressure relief mechanism 201 of the battery cell 200 is configured to correspond to the discharge structure 12 and is adjacent to the discharge structure 12. When the battery cell 200 experiences thermal runaway, high-temperature and high-pressure substances sprayed from the battery cell 200 are sprayed through the heat exchanging plate 10 from the discharge structure 12, and flow into a discharge passage and are discharged from the battery 400 through the discharge passage, effectively preventing leakage of the heat exchanging flow channel 11. Moreover, by providing the heat exchanging flow channel 11 on the at least one side of the discharge structure 12, after the battery cell 200 is in contact with the heat exchanging plate 10, it can be ensure that there is a sufficient heat exchanging area between the battery cell 200 and the heat exchanging flow channel 11. As such, it can be ensured that there is a sufficient heat exchanging area between the battery cell 200 and the heat exchanging plate 10 to improve heat exchanging efficiency between the battery cell 200 and the heat exchanging plate 10. In this way, the battery cell 200 has an appropriate temperature, which reduces a risk of the thermal runaway of the battery cell 200. Meanwhile, the heat exchanging plate 10 of the present application has a simple structure to be easily manufactured at low production cost.

Therefore, by arranging the discharging structure 12, when the battery cell 200 experiences the thermal runaway, the high-temperature and high-pressure substances sprayed from the battery cell 200 are sprayed through the heat exchanging plate 10 from the discharging structure 12, avoiding damage to the heat exchanging flow channel 11 in the heat exchanging plate 10, thereby effectively preventing the leakage of the heat exchanging flow channel 11. Furthermore, the heat exchanging plate 10 of the present application has the simple structure to be easily manufactured. Meanwhile, since the heat exchanging flow channel 11 is arranged on the at least one side of the discharging structure 12, it can be ensured that there is a sufficient heat dissipation area between the battery cell 200 and the heat exchanging plate 10 to improve the exchanging efficiency between the battery cell 200 and the heat exchanging plate 10.

According to some embodiments of the present application, as illustrated in FIGS. 4 to 9, the heat exchanging flow channel 11 is arranged on two sides of the discharge structure 12 in the width direction of the heat exchanging plate 10. After the heat exchanging plate 10 and the battery cell 200 are fitted together, the pressure relief mechanism 201 of the battery cell 200 and the discharge structure 12 are configured to correspond to each other, and the heat exchanging flow channels 11 on the two sides of the discharge structure 12 can be in contact heat with the battery cell 200 for the heat exchanging, which can further increase the heat exchanging area between the battery cell 200 and the heat exchanging flow channels 11 to improve the heat exchanging efficiency of the heat exchanging plate 10, and further to improve the heat exchanging efficiency between the battery cell 200 and the heat exchanging plate 10.

By arranging the heat exchanging flow channel 11 configured to exchange the heat with the battery cell 200 on the two sides of the discharge structure 12, the heat exchanging area between the battery cell 200 and the heat exchanging plate 10 can be further increased to improve the heat exchanging efficiency of the heat exchanging plate 10, and further to improve the heat exchanging efficiency between the battery cell 200 and the heat exchanging plate 10.

According to some embodiments of the present application, as illustrated in FIGS. 5, 7, and 9, the heat exchanging flow channel 11 extends in a length direction of the heat exchanging plate 10. The length direction of the heat exchanging plate 10 refers to a direction Y in FIGS. 5, 7, and 9. The heat exchanging flow channel 11 may be arranged in a linear shape. Since one layer of battery cells 200 has a plurality of battery cells 200, the plurality of battery cells 200 in each layer are sequentially arranged in the length direction of the heat exchanging plate 10, and the plurality of battery cells 200 in each layer are in contact with the heat exchanging flow channel 11 for the heat exchanging.

By extending the heat exchanging flow channel 11 in the length direction of the heat exchanging plate 10, an arrangement area of the heat exchanging flow channel 11 can be increased, and each heat exchanging flow channel 11 can exchange heat with a plurality of battery cells 200, further improving the heat exchanging efficiency of the heat exchanging plate 10. Furthermore, the heat exchanging flow channel 11 is arranged in the linear shape, which can simplify the structure of the heat exchanging plate 10, facilitate the manufacturing of the heat exchanging plate 10, and reduce the production cost of the heat exchanging plate 10.

According to some embodiments of the present application, in the width direction of the heat exchanging plate 10, the heat exchanging flow channel 11 has a maximum width of D1, the pressure relief mechanism 201 of the battery cell 200 has a maximum width of D2, by a relation expression satisfying 0.05D1≤D2≤D1. The maximum width of the heat exchanging flow channel 11 refers to that a maximum width of each heat exchanging flow channel 11 is D1. If the width of the heat exchanging flow channel 11 is too large, a flow speed of the heat exchanging medium in the heat exchanging flow channel 11 is affected, resulting in low heat exchanging efficiency of the heat exchanging plate 10. If the width of the heat exchanging flow channel 11 is too small, it is not easy to process the heat exchanging flow channel 11 on the heat exchanging plate 10, thus increasing the manufacturing difficulty of the heat exchanging plate 10.

In the present application, the width of the heat exchanging flow channel 11 can be appropriate by satisfying 0.05D1≤D2≤D1, which can ensure the flow speed of the heat exchanging medium in the heat exchanging flow channel 11 to ensure the heat exchanging efficiency of the heat exchanging plate 10, and can also ensure the heat exchanging area between the battery cell 200 and the heat exchanging plate 10. In this way, the heat exchanging flow channel 11 can also be easily processed on the heat exchanging plate 10 to reduce and the manufacturing difficulty of the heat exchanging plate 10.

According to some embodiments of the present application, as illustrated in FIGS. 4 to 9, a plurality of heat exchanging flow channels 11 may be sequentially arranged in the width direction of the heat exchanging plate 10, and the discharge structure 12 is arranged between at least two adjacent heat exchanging flow channels 11. The plurality of heat exchanging flow channels 11 is sequentially arranged at intervals in the width direction of the heat exchanging plate 10, and the discharge structure 12 is arranged between the two adjacent heat exchanging flow channels 11. The present application takes an example in which there is the discharge structure 12 arranged between any two adjacent heat exchanging flow channels 11 for illustration. After the heat exchanging plate 10 is fitted with the battery cell 200, two heat exchanging flow channels 11 arranged adjacent to each other can be in contact with the battery cell 200 for heat exchanging.

By arranging the discharge structure 12 between the at least two adjacent heat exchanging flow channels 11, the two adjacent heat exchanging flow channels 11 can exchange heat with a same battery cell 200 simultaneously, which can improve the heat exchanging efficiency between the battery cell 200 and the heat exchanging plate 10, and thus can rapidly heat up or cool down the battery cell 200. Moreover, by arranging the at least one discharge structure 12 between the two adjacent heat exchanging flow channels 11, an effect of providing the heat exchanging flow channel 11 on the two sides of the discharge structure 12 can be achieved.

According to some embodiments of the present application, as illustrated in FIGS. 4 to 9, a plurality of discharge structures 12 is sequentially arranged in a length direction of the heat exchanging plate 10 between the two least two adjacent heat exchanging flow channels 11, and the length direction of the heat exchanging plate 10 refers to a direction Y in FIGS. 5, 7, and 9. The present application takes an example in which a plurality of discharge structures 12 is arranged between any two adjacent heat exchanging flow channels 11 for illustration. The plurality of discharge structures 12 between the two adjacent heat exchanging flow channels 11 is sequentially arranged at intervals in the length direction of the heat exchanging plate 10, and each discharge structure 12 is configured to correspond to the pressure relief mechanism 201 of at least one battery cell 200 in each layer. The present application takes an example in which each discharge structure 12 and the pressure relief mechanism 201 of one battery cell 200 are configured to correspond to each other for illustration.

With there being the plurality of discharge structures 12 sequentially arranged in the length direction of the heat exchanging plate 10 between the two adjacent heat exchanging flow channels 11, and by configuring each discharge structure 12 correspond to the pressure relief mechanism 201 of the at least battery cell 200, the two adjacent heat exchanging flow channels 11 can exchange heat with the plurality of battery cells 200 simultaneously, which can further improve the heat exchanging efficiency of the heat exchanging plate 10.

According to some embodiments of the present application, as illustrated in FIGS. 4 to 9, any two adjacent discharge structures 12 are spaced equidistantly from each other in the length direction of the heat exchanging plate 10 which refers to a direction Y in FIGS. 5, 7, and 9. It should be noted that among the plurality of discharge structures 12 between any two adjacent heat exchanging flow channels 11, any two adjacent discharge structures 12 are spaced equidistantly from each other in the length direction of the heat exchanging plate 10.

By spacing any two adjacent discharge structures 12 equidistantly from each other, consistency of an overall structural of the heat exchanging plate 10 can be improved, which facilitates the manufacturing of the heat exchanging plate 10 to improve the production efficiency of the heat exchanging plate 10.

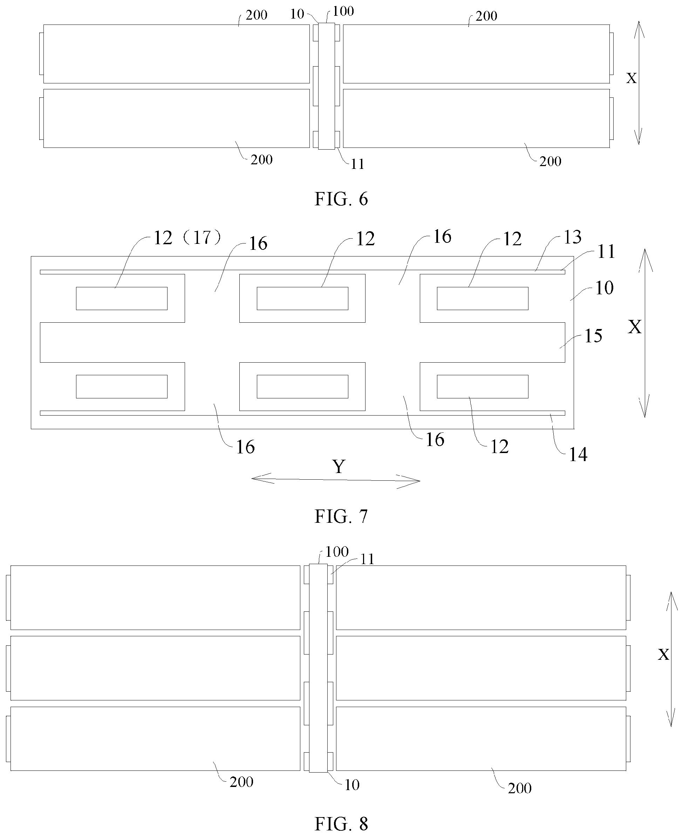

According to some embodiments of the present application, as illustrated in FIGS. 6 to 9, the plurality of heat exchanging flow channels 11 may include a first end heat exchanging flow channel 13, a second end heat exchanging flow channel 14, and a middle heat exchanging flow channel 15. The middle heat exchanging flow channel 15 is located between the first end heat exchanging flow channel 13 and the second end heat exchanging flow channel 14 in the width direction of the heat exchanging plate 10. The first end heat exchanging flow channel 13, the second end heat exchanging flow channel 14, and the middle heat exchanging flow channel 15 may be arranged parallel to each other. Each of the first end heat exchanging flow channel 13 and the second end heat exchanging flow channel 14 has a width smaller than a total width size of the middle heat exchanging flow channel 15. When a plurality of layers of battery cells 200 is arranged in the width direction of the heat exchanging plate 10, the first end heat exchanging flow channel 13 and the second end heat exchanging flow channel 14 at end parts are configured to exchange heat with one layer of battery cells 200, while the middle heat exchanging flow channel 15 at a middle part can exchange heat with two layers of battery cells 200 simultaneously. If the width of the middle heat exchanging flow channel 15 is too small, heat exchanging efficiency between the middle heat exchanging flow channel 15 and the battery cell 200 will be affected.

Because the same middle heat exchanging flow channel 15 can exchange the heat with the two adjacent layers of battery cells 200, with the width of each of the first end heat exchanging flow channel 13 and the second end heat exchanging flow channel 14 being smaller than the total width of the middle heat exchanging flow channel 15, it can be ensured that the width of the middle heat exchanging flow channel 15 is appropriate, which can ensure a sufficient heat exchanging area between the middle heat exchanging flow channel 15 and each battery cell 200, and can ensure the heat exchanging efficiency between the battery cell 200 and the heat exchanging plate 10.

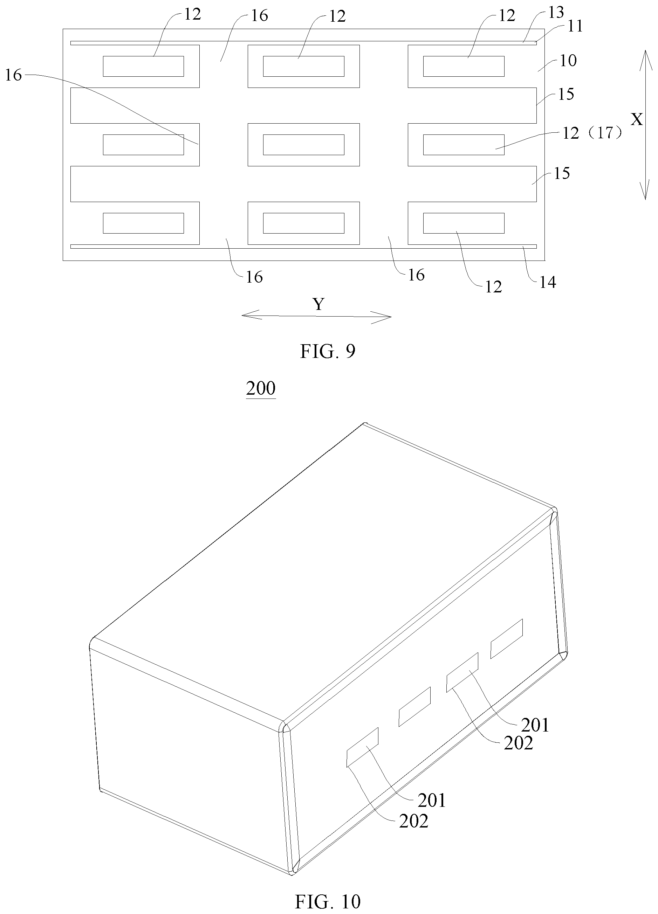

According to some embodiments of the present application, as illustrated in FIGS. 8 and 9, there may be a plurality of middle heat exchanging flow channels 15. As illustrated in FIG. 9, for example, there may be two middle heat exchanging flow channels 15, two adjacent middle heat exchanging flow channels 15 are spaced apart from each other, the discharge structure 12 is arranged between any two middle heat exchanging flow channels 15, the discharge structure 12 is arranged between the middle heat exchanging flow channel 15 and the first end heat exchanging flow channel 13, and the discharge structure 12 is arranged between the middle heat exchanging flow channel 15 and the second end heat exchanging flow channel 14.

By arranging the plurality of middle heat exchanging flow channels 15, the heat exchanging plate 10 can exchange the heat with more layers of battery cells 200 simultaneously. In this way, the heat exchanging plate 10 can exchange the heat with more battery cells 200 simultaneously, and the heat exchanging efficiency of the heat exchanging plate 10 can be further improved.

According to some embodiments of the present application, the heat exchanging flow channel has a wave shape. It should be noted that at least one heat exchanging flow channel 11 has a wave shape. An arrangement length of the heat exchanging flow channel by the wave-shaped heat exchanging flow channel 11, which can increase the arrangement area of the heat exchanging flow channel can be increased, and thus can increase the heat exchanging area between the heat exchanging flow channel and the battery cell. In this way, the efficiency of cooling the heat exchanging plate 10 and the efficiency of heating the battery cell 200 are improved.

According to some embodiments of the present application, one of the two adjacent heat exchanging flow channels 11 includes a first arc-shaped segment and the other one of the two adjacent heat exchanging flow channels 11 includes a second arc-shaped segment. The first arc-shaped segment and the second arc-shaped segment are arranged opposite to each other in the width direction of the heat exchanging plate. The first arc-shaped segment and the second arc-shaped segment are constructed to be curved in a direction facing away from each other. At least one discharge structure is located between the first arc-shaped segment and the second arc-shaped segment. The present application takes an example in which one discharge structure 12 is arranged between the first arc-shaped segment and the second arc-shaped segment. The heat exchanging flow channel 11 with the first arc-shaped segment includes a plurality of first arc-shaped segments sequentially arranged in the length direction of the heat exchanging plate 10. The heat exchanging flow channel 11 with the second arc-shaped segment includes a plurality of second arc-shaped segments sequentially arranged in the length direction of the heat exchanging plate 10. The plurality of first arc-shaped segments and the plurality of second arc-shaped segments are in a one-to-one correspondence. There is a discharge structure 12 between the first arc-shaped segment and the second arc-shaped segment that are arranged opposite to each other. By arranging the first arc-shaped segment and the second arc-shaped segment, after the battery cell 200 is fitted with the heat exchanging plate 10, the first arc-shaped segment and the second arc-shaped segment can exchange heat with the same battery cell 200. Because the first arc-shaped segment and the second arc-shaped segment are of the arc shape, the arrangement area of the heat exchanging flow channel 11 can be further increased, which can increase a heat exchanging area between the first arc-shaped segment and the second arc-shaped segment and the corresponding battery cells 200, and thus further improves the heat exchange efficiency of the heat exchange plate 10.

The arrangement area of the heat exchanging flow channel can be further increased by locating the at least one discharge structure between the first arc-shaped segment and the second arc-shaped segment, which can further increase the heat exchanging area between the heat exchanging flow channel and the battery cell, and thus further improves the heat exchanging efficiency of the heat exchanging plate.

According to some embodiments of the present application, the plurality of heat exchanging flow channels 11 are in communication with each other. For example, as illustrated in FIGS. 5, two heat exchanging flow channels 11 are provided and are in communication with each other; or as illustrated in FIGS. 7, three heat exchanging flow channels 11 are provided and are in communication with each other, and it can also be understood that any two of the three heat exchanging flow channels 11 are in communication with each other; or as illustrated in FIGS. 9, four heat exchanging flow channels 11 are provided and are in communication with each other, and it can also be understood that any two of the four heat exchanging flow channels 11 are in communication with each other.

The heat exchanging medium in the heat exchanging flow channel 11 can freely flow in the plurality of heat exchanging flow channels 11 with the plurality of heat exchanging flow channels being in communication with each other, which can improve consistency of heat exchange efficiency of different regions of the heat exchanging plate 10. When the battery cell 200 exchanges the heat with the heat exchanging plate 10, a temperature difference of the plurality of battery cells 200 can be reduced with an improvement in temperature consistency between the plurality of battery cells 200.

According to some embodiments of the present application, as illustrated in FIGS. 5, 7, and 9, the heat exchanging plate 10 has a connecting flow channel 16 in communication with the plurality of heat exchanging flow channels 11. There may be one communication flow channel. In this case, one communication flow channel is in communication with each of the plurality of heat exchanging flow channels 11. Or there may be a plurality of communication flow channels. When a number of heat exchanging flow channels 11 is greater than or equal to three, at least one communication flow channel is connected between any two heat exchanging flow channels 11. An effect of intercommunication between the plurality of heat exchanging flow channels 11 is achieved by arranging the connecting flow channel 16.

According to some embodiments of the present application, the discharge structure 12 is constructed in a strip shape, and the discharge structure 12 extends in a length direction of the heat exchanging plate 10. Since the pressure relief mechanism 201 of the battery cell 200 has a strip-shaped structure, by constructing the discharge structure 12 into the strip shape, the discharge structure 12 can be adapted to the pressure relief mechanism 201 of the battery cell 200, and a width of the discharge structure 12 can also be reduced such that the heat exchanging plate 10 has more width to arrange the heat exchanging flow channel 11. In this way, an arrangement width of the heat exchanging flow channel 11 can be increased. Therefore, that heat exchanging area between the heat exchanging flow channel 11 and the battery cell 200 can be increased, greatly improving the heat exchanging efficiency of the heat exchanging plate 10.

According to some embodiments of the present application, as illustrated in FIGS. 5, 7, and 9, the discharge structure 12 may be constructed as a discharge hole 17. After the battery cell 200 is fitted to be in contact with the heat exchanging plate 10, the pressure relief mechanism 201 of the battery cell 200 is aligned with the discharge hole 17. When the battery cell 200 experiences thermal runaway, the high-temperature and high-pressure substances sprayed from the battery cell 200 are sprayed through the heat exchanging plate 10 from the discharge hole 17, and flow into the discharge passage and are discharged out of the battery 400 from the discharge passage.

By constructing the discharge structure 12 as the discharge hole 17, when the battery cell 200 experiences thermal runaway, the high-temperature and high-pressure substances sprayed from the battery cell 200 are sprayed through the heat exchanging plate 10 from the discharge hole 17. Moreover, the discharge hole 17 is easily processed, which can also decrease the production difficulty of the heat exchanging plate 10, improve the production efficiency of the heat exchanging plate 10, and reduce the production cost of the heat exchanging plate 10.

According to some embodiments of the present application, the discharge structure 12 is constructed as a weak portion. The weak portion is separated from the heat exchanging plate 10 when the weak portion is subjected to a pressure reaching a predetermined value and/or a temperature reaches a predetermined temperature. It can also be understood that the weak portion is separated from the heat exchanging plate 10 when the weak portion is subjected to a pressure reaching a predetermined value, or the weak portion is separated from the heat exchanging plate 10 when the weak portion is subjected to a temperature reaching a predetermined temperature, or the weak portion is separated from the heat exchanging plate 10 when the weak portion is subjected to a pressure reaching a predetermined value and a temperature reaches a predetermined temperature. After the battery cell 200 is fitted to be in contact with the heat exchanging plate 10, the pressure relief mechanism 201 of the battery cell 200 is aligned with the weak portion. When the battery cell 200 experiences the thermal runaway, the high-temperature and high-pressure substances sprayed from the battery cell 200 are sprayed to the weak portion. Under the high temperature and the high pressure, the weak portion is separated from the heat exchanging plate 10 to form the discharge hole 17, and the high-temperature and high-pressure substances sprayed from the battery cell 200 are sprayed through the heat exchanging plate 10 from the discharge hole 17, and flow into the discharge passage and are discharged out of the battery 400 from the discharge passage.

By constructing the discharge structure 12 as the weak portion, when the battery cell 200 experiences the thermal runaway, it can be ensured that the high-temperature and high-pressure substances sprayed from the battery cell 200 are sprayed through the heat exchanging plate 10 from the weak portion, thereby avoiding explosion of the battery cell 200.

According to some embodiments of the present application, the heat exchanging plate 10 has an indentation to form weak portion on the heat exchanging plate 10. After the battery cell 200 is fitted to be in contact with the heat exchanging plate 10, the pressure relief mechanism 201 of the battery cell 200 is aligned with the weak portion. When the battery cell 200 experiences the thermal runaway, the high-temperature and high-pressure substances sprayed from the battery cell 200 are sprayed to the weak portion. Under the high temperature and the high pressure, the weak portion is separated from the heat exchanging plate 10 from the indentation.

By providing the indentation on the heat exchanging plate 10, an effect of forming the weak portion on the heat exchanging plate 10 can be achieved, and it can also be ensured that the weak portion is separated from the heat exchanging plate 10 when the weak portion is subjected to the pressure reaching the predetermined value or the temperature reaches the predetermined temperature.

According to some embodiments of the present application, the heat exchanging plate 10 has a medium inlet and a medium outlet, and the heat exchanging flow channel 11 is in communication with the medium inlet and the medium outlet. A heat exchanging medium can flow into the heat exchanging flow channel 11 from the medium inlet, and a heat exchanging medium flowing into the heat exchanging flow channel 11 can flow to the medium outlet along the heat exchanging flow channel 11, and finally the heat exchanging medium flows out of the heat exchanging plate 10 from the medium outlet to take away the heat. It should be noted that the heat exchanging medium may be a heat exchanging medium in a liquid form. For example, the heat exchanging medium is water. The heat exchanging medium may also be a heat exchanging medium in a gaseous form. For example, the heat exchanging medium is gas.

With the heat exchanging flow channel 11 being in communication with the medium inlet and the medium outlet, an effect in which the heat exchanging medium flows in and out of the heat exchanging flow channel 11 can be achieved. The heat exchanging medium can continuously take away the heat of the battery cell 200, which can ensure that the heat exchanging efficiency of the heat exchanging plate 10.

According to some embodiments of the present application, as illustrated in FIGS. 2 and 3, in a thickness direction of the heat exchanging plate 10, the heat exchanging flow channel 11 protrudes from one side surface of the heat exchanging plate 10, and another side surface of the heat exchanging plate 10 is constructed as a plane. After the battery cell 200 is fitted to be in contact with the heat exchanging plate 10, the other side surface of the heat exchanging plate 10 constructed as the plane is in contact with the battery cell 200. As a result, the battery cell 200 is in face-to-face contact with the heat exchanging plate 10, which can increase a contact area between the heat exchanging plate 10 and the battery cell 200. In this way, the heat exchanging efficiency between the heat exchanging plate 10 and the battery cell 200 can be improved.

By constructing the other side surface of the heat exchanging plate 10 as the plane, the battery cell 200 is in face-to-face contact with the heat exchanging plate 10 when the other side surface of the heat exchanging plate 10 is in contact with the battery cell 200, which can increase the contact area between the heat exchanging plate 10 and the battery cell 200. In this way, the heat exchanging efficiency between the heat exchanging plate 10 and the battery cell 200 can be improved.

According to some embodiments of the present application, as illustrated in FIGS. 4, 6, and 8, in a thickness direction of the heat exchanging plate 10, the heat exchanging flow channel 11 and the discharge structure 12 protrude from a same side surface of the heat exchanging plate 10. As illustrated in FIGS. 4, 6, and 8, the heat exchanging flow channel 11 and the discharge structure 12 protrude from an outer side surface of the heat exchanging plate 10. At least one layer of battery cells 200 is arranged on a side of the heat exchanging plate 10. After the battery cell 200 is fitted to be in contact with the heat exchanging plate 10, the pressure relief mechanism 201 of the battery cell 200 is aligned with the discharge structure 12, and the heat exchanging flow channel 11 protruding from the heat exchanging plate 10 is in contact with the corresponding battery cell 200 for the heat exchanging.

By protruding the heat exchanging flow channel 11 and the discharge structure 12 from the same side surface of the heat exchanging plate 10, when the discharge structure 12 is aligned with the pressure relief mechanism 201 of the battery cell 200, it can be ensured that the heat exchanging flow channel 11 is in contact with the battery cell 200 for the heat exchanging.

According to some embodiments of the present application, as illustrated in FIG. 3, the heat exchanging assembly 100 may further include a main member 20. The main member 20 may be a beam, the discharge passage may be defined by the main member 20, or the discharge passage may be defined by the main member 20 and the heat exchanging plate 10. The heat exchanging plate 10 is attached to at least one side of the main member 20, that is, in a thickness direction of the heat exchanging assembly 100, the heat exchanging plate 10 is arranged on a side of the main member 20, or the heat exchanging plate 10 is arranged on the two sides of the main member 20. As illustrated in FIG. 3, at least one layer of battery cells 200 is arranged on two sides of the heat exchanging assembly 100, and a same heat exchanging assembly 100 can exchange heat with more battery cells 200 simultaneously, thereby improving the heat exchanging efficiency of the heat exchanging assembly 100.

By attaching the heat exchanging plate 10 to the at least one side of the main member 20, the heat exchanging plate 10 can be integrated into the main member 20 such that the main member 20 has heat exchanging performance. Moreover, the heat exchanging assembly 100 integrates the heat exchanging plate 10 and the discharge passage. After the heat exchanging assembly 100 is mounted in the box of the battery 400, more space is available in the box for mounting of the battery cell 200, which improves a space utilization rate in the case. In this way, an electric capacity of the battery 400 is greatly improved.

Further, the main member 20 has a groove, and at least part of the heat exchanging plate 10 is accommodated in the groove. At least one side of the main member 20 has the groove. The present application takes an example in which the two sides of the main member 20 have the groove. When the heat exchanging plate 10 and the main member 20 are fitted, the heat exchanging plate 10 is fixedly mounted in the groove to realize the integration of the heat exchanging plate 10 and the main member 20. As a result, the heat exchanging plate 10 can be fixed to the main member 20.

By accommodating the at least part of the heat exchanging plate 10 in the groove, The heat exchanging plate 10 can be fixed to the main body 20, and a space occupied by the heat exchanging plate 10 in the case can also be further reduced to have more space in the box for the mounting of the battery cell 200. In this way, the electric capacity of the battery 400 is further improved.

According to some embodiments of the present application, the heat exchanging plate 10 is the heat exchanging plate 10 in the above embodiments, and a side surface of the heat exchanging plate 10 where the heat exchanging flow channel 11 protrudes from faces the groove. The heat exchanging flow channel 11 protrudes from a side surface of the heat exchanging plate 10. Another side surface of the heat exchanging plate 10 is constructed as a plane. The side surface of the heat exchanging plate 10 where the heat exchanging flow channel 11 protrudes from is arranged facing towards the groove to allow the heat exchanging flow channel 11 to be fitted into the groove, and the other side surface of the heat exchanging plate 10 constructed as the plane is exposed to be in contact with the battery cell 200 for the heat exchanging.

By providing that the side surface of the heat exchanging plate 10 where the heat exchanging flow channel 11 protrudes from faces the groove, the other side surface of the heat exchanging plate 10 constructed as the plane can be in contact with the battery cell 200 for the heat exchanging, which can ensure that the contact area between the battery cell 200 and the heat exchanging plate 10. Moreover, the heat exchanging flow channel 11 is hidden in the groove, which can further reduce the space occupied by the heat exchanging plate 10 in the box to have more space for the mounting of the battery cell 200 in the box. In this way, the electric capacity of the battery 400 is further improved.

As illustrated in FIGS. 2 to 10, according to some embodiments of the present application, the present application further provides a battery module 300. The battery module 300 includes a heat exchanging assembly 100 described in the above embodiments and the battery cell 200. The battery cell 200 is arranged on at least one side of the heat exchanging plate 10. The discharge structure 12 is configured to correspond to the pressure relief mechanism 201 (i.e. the explosion-proof valve) of the battery cell 200, and the heat exchanging flow channel 11 is configured to correspond to the battery cell 200. As illustrated in FIG. 3, in the thickness direction of the heat exchanging plate 10, the battery cell 200 is arranged on the two sides of the heat exchanging plate 10. Specifically, the heat exchanging assembly 100 may include a main member 20, the heat exchanging plate 10 is arranged on two sides of the main member 20, and the battery cell 200 is in contact with the heat exchanging plate 10 on a same side of the main member 20 for the heat exchanging.

By arranging the discharging structure 12, when the battery cell 200 experiences the thermal runaway, the high-temperature and high-pressure substances sprayed from the battery cell 200 are sprayed through the heat exchanging plate 10 from the discharging structure 12, avoiding the damage to the heat exchanging flow channel 11 in the heat exchanging plate 10, effectively prevent the leakage of the heat exchanging flow channel 11 to prolong a service life of the battery module 300. Moreover, the heat exchanging plate 10 of the present application has the simple structure to be easily manufactured, which improves fitting efficiency of the battery module 300. Meanwhile, in the width direction of the heat exchanging plate 10, the heat exchanging flow channel 11 is arranged on the at least one side of the discharge structure 12, which ensure that there is the sufficient heat dissipation area between the battery cell 200 and the heat exchanging plate 10 to improve the heat exchanging efficiency between the battery cell 200 and the heat exchanging plate 10.

According to some embodiments of the present application, the heat exchanging assembly 100 is the heat exchanging assembly 100 described in the above embodiments. As illustrated in FIGS. 3 and 10, a side surface of the battery cell 200 provided with the pressure relief mechanism 201 is attached to a surface of the heat exchanging plate 10 constructed as a plane. By attaching the surface of the battery cell 200 provided with the pressure relief mechanism 201 to the surface of the heat exchanging plate 10 to be constructed as the plane, the battery cell 200 is in face-to-face contact with the heat exchanging plate 10, which can increase the contact area between the heat exchanging plate 10 and the battery cell 200. In this way, the heat exchanging efficiency between the heat exchanging plate 10 and the battery cell 200 can be improved.

According to some embodiments of the present application, as illustrated in FIG. 10, the pressure relief mechanism 201 is constructed as a strip-shaped structure extending in a length direction of the heat exchanging plate 10. A width of the explosion-proof valve of the existing battery cell is relatively large in the thickness direction of the battery cell 200, and after the battery cell is in contact with the heat exchanging plate, a surface of the battery cell provided with the explosion-proof valve is in contact with the heat exchanging plate. Since the width of the explosion-proof valve of the battery cell is relatively large, the contact area between the battery cell and the heat exchanging plate is reduced, which thus affects the heat exchanging efficiency between the battery cell and the heat exchanging plate.

However, in the present application, by constructing the pressure relief mechanism 201 as the strip-shaped structure extending in the length direction of the heat exchanging plate 10, the width of the pressure relief mechanism 201 can be reduced under a condition of ensuring an appropriate explosion proof area without affecting thermal runaway pressure relief of the battery cell 200, and the heat exchanging area between the battery cell 200 and the heat exchanging plate 10 can be increased. Therefore, the heat exchanging efficiency of the heat exchanging plate 10 can be improved.

As a result, by configuring the pressure relief mechanism 201 into the strip-shaped structure, the width of the pressure relief mechanism 201 can be reduced, and the heat exchanging area between the battery cell 200 and the heat exchanging plate 10 can be increased. Therefore, the heat exchanging efficiency of the heat exchanging plate 10 can be improved.

According to some embodiments of the present application, as illustrated in FIG. 10, the battery cell 200 includes a plurality of strip-shaped pressure relief mechanisms 201 extending in the length direction of the heat exchanging plate 10. For example, a number of the pressure relief mechanisms 201 may be two, three, four, five, etc., and the plurality of pressure relief mechanisms 201 are arranged on a same end surface of the battery cell 200. By arranging the plurality of pressure relief mechanisms 201 on the same end surface of the battery cell 200, and after the battery cell 200 is fitted with the heat exchanging plate 10, the plurality of pressure relief mechanisms 201 of the battery cell 200 is easily configured to correspond to the discharge structure 12, to ensure that the high-pressure and high-temperature substances sprayed from each pressure relief mechanism 201 are sprayed to the corresponding discharge structure 12. Furthermore, by arranging the plurality of strip-shaped pressure relief mechanisms 201, when the battery cell 200 experiences the thermal runaway, it cannot affect the spraying of the high-temperature and high-pressure substances for the pressure relief. In this way, the explosion of the battery cell 200 can be effectively avoided.

According to some embodiments of the present application, a notch 202 may be arranged on a housing of the battery cell 200, and the notch 202 defines the pressure relief mechanism 201 (i.e., the explosion-proof valve). Since the pressure relief mechanism 201 is defined by the notch 202, a partial structure of the housing can be constructed as the explosion-proof valve, without separately providing an independent explosion-proof valve, which can reduce the cost of the battery cell 200 can be reduced, and also can simplify the structure of the battery cell 200.

According to some embodiments of the present application, as illustrated in FIG. 2, a battery 400 is further provided according to the present application. The battery 400 includes the battery module 300 described in the above embodiments. The battery module 300 is mounted in the box of the battery 400. When the battery cell 200 experiences the thermal runaway, the high-temperature and high-pressure substances sprayed from the battery cell 200 are sprayed through the heat exchanging plate 10 from the discharge structure 12, avoiding the damage to the heat exchanging flow channel 11 in the heat exchanging plate 10, effectively preventing the leakage of the heat exchanging flow channel 11 to prolong a service life of the battery 400. Moreover, the heat exchanging plate 10 of the present application has the simple structure to be easily manufactured, which improves fitting efficiency of the battery 400. Meanwhile, in the width direction of the heat exchanging plate 10, the heat exchanging flow channel 11 is arranged on the at least one side of the discharge structure 12, which ensure that there is the sufficient heat dissipation area between the battery cell 200 and the heat exchanging plate 10 to improve the heat exchanging efficiency between the battery cell 200 and the heat exchanging plate 10.

According to some embodiments of the present application, as shown in FIG. 1, an electrical device 500 is further provided according to the present application. The electrical device 500 includes a battery 400 described in the above embodiments, and the battery 400 is configured to provide power for the electrical device 500.

The electric device 500 may be any of the aforementioned devices or systems using the battery 400.

According to some embodiments of the present application, referring to FIGS. 3 to 10, the present application provides a battery module 300. The battery module 300 includes a heat exchanging assembly 100 and at least one layer of battery cells 200. Each of the at least one layer of battery cells 200 includes a plurality of battery cells 200 sequentially arranged in the length direction of the heat exchanging plate 10. A pressure relief mechanism 201 of a strip shape is arranged on each battery cell 200. The heat exchanging assembly 100 includes a heat exchanging plate 10 provided with at least one layer of discharge structures 12. Each of the at least one layer of discharge structures 12 includes a plurality of discharge structures 12. The discharge structures 12 each are of a strip-shaped structure. The plurality of discharge structures 12 in each layer of discharge structures 12 is sequentially arranged in the length direction of the heat exchanging plate 10, and the plurality of discharge structures 12 and the plurality of battery cells 200 in each layer are in a one-to-one correspondence. The heat exchanging plate 10 has a plurality of heat exchanging flow channels 11 sequentially arranged at intervals in the width direction of the heat exchanging plate 10, a layer of discharge structure 12 is arranged between any two adjacent heat exchanging flow channels 11 of the plurality of heat exchanging flow channels 11, and each of the plurality of heat exchanging flow channels 11 extends in the length direction of the heat exchanging plate 10. When the battery cell 200 is fitted and engaged with the heat exchanging plate 10, the battery cell 200 exchanges heat with two adjacent heat exchanging flow channels 11, which increases the heat exchanging area to ensure the sufficient heat dissipation area between the battery cell 200 and the heat exchanging plate 10, and thus to improve the heat exchanging efficiency between the battery cell 200 and the heat exchanging plate 10.

It should be noted that the embodiments of the present application and features in the embodiments can be combined with each other without any conflict.

The above embodiments are only the preferred embodiments of the present application and are not intended to limit the present application. For those skilled in the art, various changes and variations can be made to the present application. Any modifications, equivalent substitutions, and improvements made within the spirit and principle of the present application shall fall within the scope of protection of the present application.

## Claims

1. A heat exchanging assembly, comprising:
a heat exchanging plate having a heat exchanging flow channel, the heat exchanging plate having a discharge structure, wherein:
the discharge structure is configured to correspond to a pressure relief mechanism of a battery cell; and
the heat exchanging flow channel is arranged on at least one side of the discharge structure in a width direction of the heat exchanging plate, the heat exchanging flow channel being configured to exchange heat with the battery cell.

2. The heat exchanging assembly according to claim 1, wherein the heat exchanging flow channel is arranged on two sides of the discharge structure.

3. The heat exchanging assembly according to any one of claims 1 to 2, wherein the heat exchanging flow channel extends in a length direction of the heat exchanging plate.

4. The heat exchanging assembly according to any one of claims 1 to 3, wherein:
the heat exchanging flow channel has a maximum width of D1; and
the pressure relief mechanism of the battery cell has a maximum width of D2, by a relation expression satisfying 0.05D1≤D2≤D1.

5. The heat exchanging assembly according to any one of claims 1 to 4, wherein:
a plurality of heat exchanging flow channels is sequentially arranged in the width direction of the heat exchanging plate; and
the discharge structure is arranged between at least two adjacent heat exchanging flow channels of the plurality of heat exchanging flow channels.

6. The heat exchanging assembly according to claim 5, wherein a plurality of discharge structures is sequentially arranged in a length direction of the heat exchanging plate and located between the at least two adjacent heat exchanging flow channels of the plurality of heat exchanging flow channels.

7. The heat exchanging assembly according to claim 6, wherein any two adjacent discharge structures of the plurality of discharge structures are equidistantly spaced from each other in the length direction of the heat exchanging plate.

8. The heat exchanging assembly according to any one of claims 5 to 7, wherein the plurality of heat exchanging flow channels comprises a first end heat exchanging flow channel, a second end heat exchanging flow channel, and a middle heat exchanging flow channel, the middle heat exchanging flow channel being located between the first end heat exchanging flow channel and the second end heat exchanging flow channel, and each of the first end heat exchanging flow channel and the second end heat exchanging flow channel having a width smaller than a total width of the middle heat exchanging flow channel.

9. The heat exchanging assembly according to claim 8, wherein a plurality of middle heat exchanging flow channels is provided.

10. The heat exchanging assembly according to any one of claims 5 to 7, wherein the heat exchanging flow channels have a wave shape.

11. The heat exchanging assembly according to claim 10, wherein one of two adjacent heat exchanging flow channels comprises a first arc-shaped segment and the other one of the two adjacent heat exchanging flow channels comprises a second arc-shaped segment, wherein:
the first arc-shaped segment and the second arc-shaped segment are arranged opposite to each other in the width direction of the heat exchanging plate; and
the first arc-shaped segment and the second arc-shaped segment are constructed to be curved in a direction facing away from each other, at least one discharge structure being located between the first arc-shaped segment and the second arc-shaped segment.

12. The heat exchanging assembly according to any one of claims 5 to 11, wherein the plurality of heat exchanging flow channels is in communication with each other.

13. The heat exchanging assembly according to claim 12, wherein the heat exchanging plate has a connecting flow channel in communication with the plurality of the heat exchanging flow channels.

14. The heat exchanging assembly according to any one of claims 1 to 13, wherein:
the discharge structure is constructed in a strip shape; and
the discharge structure extends in a length direction of the heat exchanging plate.

15. The heat exchanging assembly according to any one of claims 1 to 14, wherein the discharge structure is constructed as a discharge hole.

16. The heat exchanging assembly according to any one of claims 1 to 14, wherein the discharge structure is configured as a weak portion, the weak portion being separated from the heat exchanging plate when the weak portion is subjected to a pressure reaching a predetermined value and/or a temperature of the weak portion reaches a predetermined temperature.

17. The heat exchanging assembly of claim 16, wherein the heat exchanging plate has an indentation to form the weak portion on the heat exchanging plate.

18. The heat exchanging assembly according to any one of claims 1 to 17, wherein the heat exchanging plate has a medium inlet and a medium outlet, the heat exchanging flow channel being in communication with the medium inlet and the medium outlet.

19. The heat exchanging assembly according to any one of claims 1 to 18, wherein in a thickness direction of the heat exchanging plate:
the heat exchanging flow channel protrudes from one side surface of the heat exchanging plate; and
another side surface of the heat exchanging plate is constructed as a plane.

20. The heat exchanging assembly according to any one of claims 1 to 18, wherein in a thickness direction of the heat exchanging plate, the heat exchanging flow channel and the discharge structure protrude from a same side surface of the heat exchanging plate.

21. The heat exchanging assembly according to any one of claims 1 to 20, further comprising a main member, the heat exchanging plate being attached to at least one side of the main member.

22. The heat exchanging assembly of claim 21, wherein the main member has a groove, at least part of the heat exchanging plate being accommodated in the groove.

23. The heat exchanging assembly according to claim 22, wherein the heat exchanging plate is the heat exchanging plate according to claim 19, and wherein the one side surface of the heat exchanging plate where the heat exchanging flow channel protrudes from faces toward the groove.

24. A battery module, comprising:
the heat exchanging assembly according to any one of claims 1 to 23; and
the battery cell arranged on at least one side of the heat exchanging plate, wherein:
the discharge structure is configured to correspond to the pressure relief mechanism of the battery cell, and
the heat exchanging flow channel is arranged to correspond to the battery cell.

25. The battery module according to claim 24, wherein the heat exchanging assembly is the heat exchanging assembly according to claim 23, and wherein a side surface of the battery cell provided with the pressure relief mechanism is attached to a surface of the heat exchanging plate constructed as a plane.

26. The battery module according to any one of claims 24 to 25, wherein the pressure relief mechanism is constructed as a strip-shaped structure extending in a length direction of the heat exchanging plate.

27. The battery module according to claim 26, wherein the battery cell comprises a plurality of strip-shaped pressure relief mechanisms extending in the length direction of the heat exchanging plate, the plurality of pressure relief mechanisms being arranged at a same end surface of the battery cell.

28. A battery, comprising the battery module according to any one of claims 24 to 27.

29. An electrical device, comprising the battery according to claim 28, wherein the battery is configured to provide electrical energy.
